# EUROPÄISCHE PATENTSCHRIFT

(11) **EP 2 284 910 B1**
(45) Veröffentlichungstag und Bekanntmachung des Hinweises auf die Patenterteilung: **02.03.2016**
(21) Anmeldenummer: 09010392.0
(22) Anmeldetag: 12.08.2009
(51) Int. Cl.: H02S 40/44

(54) **Solarabsorber**
Solar absorber
Absorbeur solaire

(43) Veröffentlichungstag der Anmeldung: 16.02.2011
(73) Patentinhaber: Roth Werke GmbH, 35232 Dautphetal (DE)
(72) Erfinder:
(74) Vertreter: Rohmann, Michael

(56) Entgegenhaltungen:
- EP-A2- 1 873 843
- DE-A1-102006 027 629
- US-A1- 2002 121 298
- US-A1- 2008 011 289

## Beschreibung

Die Erfindung betrifft einen Solarabsorber zur Gewinnung von thermischer Energie mit einer oberseitigen Absorberwandung und einer unterseitigen Absorberwandung, wobei zwischen der oberseitigen Absorberwandung und der unterseitigen Absorberwandung zumindest ein Durchströmungszwischenraum für ein Wärmeträgermedium vorhanden ist und wobei zusätzlich Photovoltaikelemente zur Gewinnung von elektrischer Energie vorgesehen sind.

Aus der Praxis sind Solarabsorber der vorstehend genannten Art grundsätzlich bekannt. Die Absorberwandungen dieser bekannten Solarabsorber bestehen aus Metall bzw. im Wesentlichen aus Metall. Die Photovoltaikelemente sind mit deutlichem Abstand über der oberseitigen Absorberwandung angeordnet. Diese bekannten Solarabsorber bzw. Solarkollektoren lassen im Hinblick auf ihren Wirkungsgrad, insbesondere bezüglich der Erzeugung der elektrischen Energie zu wünschen übrig.

Ein weiterer Solarabsorber ist aus dem Dokument DE-A-102006027629 bekannt.

Demgegenüber liegt der Erfindung das technische Problem zugrunde, einen Solarabsorber der eingangs genannten Art anzugeben, der sich durch einen hohen Wirkungsgrad, insbesondere im Hinblick auf die Erzeugung der elektrischen Energie, aber auch im Hinblick auf die Erzeugung der thermischen Energie auszeichnet und der fernerhin auch eine ausreichende Stabilität bzw. Festigkeit aufweist sowie mit einfachen Maßnahmen kostengünstig herstellbar ist.

Zur Lösung dieses technischen Problems lehrt die Erfindung einen Solarabsorber zur Gewinnung von thermischer Energie mit einer oberseitigen Absorberwandung und einer unterseitigen Absorberwandung, wobei zwischen der oberseitigen Absorberwandung zumindest ein Durchströmungszwischenraum für ein Wärmeträgermedium vorgesehen ist, wobei zusätzlich Photovoltaikelemente zur Gewinnung von elektrischer Energie vorgesehen sind

und wobei die Photovoltaikelemente unmittelbar auf der Oberfläche der oberseitigen Absorberwandung aufliegen (erste Alternative) oder mit einem Abstand kleiner 5 mm, vorzugsweise kleiner 3 mm über der Oberfläche der oberseitigen Absorberwandung angeordnet sind (zweite Alternative).

Die Photovoltaikelemente sind gemäß der zweiten Alternative zweckmäßigerweise mit einem Abstand kleiner 2,5 mm, bevorzugt kleiner 2 mm, sehr bevorzugt kleiner 1 mm und besonders bevorzugt kleiner 0,5 mm über der Oberfläche der oberseitigen Absorberwandung angeordnet. - Der Begriff oberseitig bezieht sich im Übrigen hier und nachfolgend auf die von Sonneneinstrahlung beaufschlagte Oberfläche des Solarabsorbers. Dementsprechend bezieht sich der Begriff unterseitig hier und nachfolgend auf die der Sonneneinstrahlung abgewandte Unterseite des Solarabsorbers.

Nach bevorzugter Ausführungsform der Erfindung wird der Durchströmungszwischenraum bzw. werden die Durchströmungszwischenräume von einer Mehrzahl bzw. Vielzahl von Durchströmungskanälen gebildet. Zweckmäßigerweise sind diese Durchströmungskanäle parallel bzw. im Wesentlichen parallel zueinander angeordnet Nach einer alternativen Ausführungsform der Erfindung ist aber auch eine ganzflächige Durchströmung des Solarabsorbers mit dem Wärmeträgermedium möglich. Das den Solarabsorber bzw. die Durchströmungszwischenräume durchströmende Wärmeträgermedium wird durch die Sonneneinstrahlung erwärmt und auf diese Weise wird thermische Energie erzeugt. Bei dem Wärmeträgermedium handelt es sich zweckmäßigerweise um ein flüssiges Wärmeträgermedium und bevorzugt besteht das flüssige Wärmeträgermedium aus Wasser bzw. im Wesentlichen aus Wasser. Die Durchströmungszwischenräume bzw. die Durchströmungskanäle des Solarabsorbers werden zweckmäßigerweise mit einem Verteiler und einem Sammler für das Wärmeträgermedium verbunden. Zumindest der Sammler ist vorzugsweise in den Solarabsorber integriert.

Erfindungsgemäß sind zusätzliche Photovoltaikelemente vorgesehen, so dass neben thermischer Energie auch elektrische Energie erzeugt werden kann. Die auf diese Weise erzeugte elektrische Energie kann insbesondere in vorteilhafter Weise im Zusammenhang mit einer Wärmepumpe eingesetzt werden.

Nach Ausführungsform der Erfindung besteht zumindest die oberseitige Absorberwandung aus Kunststoff bzw. im Wesentlichen aus Kunststoff. Auch die unterseitige Absorberwandung besteht aus Kunststoff bzw. im Wesentlichen aus Kunststoff. Die Erfindung ist dadurch gekennzeichnet, dass die oberseitige und die unterseitige Absorberwandung aus Kunststoff bestehen und dass das Aggregat aus oberseitiger und unterseitiger Absorberwandung in einem diskontinuierlichen Extrusionsverfahren, im Pressverfahren oder im Tiefziehverfahren hergestellt ist. Diskontinuierliches Extrusionsverfahren meint insbesondere ein Blasformverfahren oder ein Spritzgussverfahren. Das Blasformverfahren ist dabei bevorzugt. Bei dem Kunststoff des Solarabsorbers handelt es sich zweckmäßigerweise um ein Polyolefin und vorzugsweise um Polypropylen. Vorzugsweise enthält der Kunststoff des Solarabsorbers Additive zur Erhöhung der Absorptionsfähigkeit und/oder zur UV-Stabilisierung und/oder zur Erhöhung der mechanischen Fertigkeit. Es empfiehlt sich für den Solarabsorber einen schwarz eingefärbten Kunststoff zu verwenden. Zweckmäßigerweise enthält der Kunststoff des Solarabsorbers 0,5 bis 4 Gew.%, vorzugsweise 0,7 bis 3 Gew.% und bevorzugt 1 bis 2 Gew.% Russ. Der Russzusatz trägt zur Absorptionssteigerung und zur UV-Stabilisierung des Solarabsorbers bei. Es liegt im Rahmen der Erfindung, dem Kunststoff des Solarabsorbers Additive zur thermischen und/oder mechanischen Stabilisierung und/oder zur Erhöhung der Wärmeleitfähigkeit zuzusetzen. Der Kunststoff des Solarabsorbers kann durch den Zusatz von Fasern verstärkt werden. Hierzu werden insbesondere Zellulosefasern eingesetzt. - Empfohlenermaßen weist die oberseitige Absorberwandung und bevorzugt auch die unterseitige Absorberwandung eine Wandstärke von 0,5 bis 4 mm, vorzugsweise von 1 bis 3 mm und bevorzugt von 2 bis 3 mm auf.

Gemäß einer bevorzugten Ausführungsform der Erfindung ist über bzw. auf der Oberfläche der oberseitigen Absorberwandung zumindest eine transparente Abdeckscheibe angeordnet und die Photovoltaikelemente sind unter oder in der transparenten Abdeckscheibe vorgesehen. Zweckmäßigerweise deckt die transparente Abdeckscheibe die oberseitige Absorberwandung vollständig bzw. im Wesentlichen vollständig ab. Vorzugsweise handelt es sich bei der transparenten Abdeckscheibe um eine transparente Glasscheibe. Die transparente Abdeckscheibe kann plan oder gewölbt ausgebildet sein.

Gemäß einer Ausführungsvariante sind die Photovoltaikelemente Solarzellen auf Basis von kristallinem Silizium. Diese Photovoltaikelemente werden vorzugsweise in Kombination mit der vorstehend beschriebenen transparenten Abdeckscheibe bzw. Glasscheibe eingesetzt. Es empfiehlt sich, dass die Photovoltaikelemente bzw. Solarzellen unter der transparenten Abdeckscheibe bzw. Glasscheibe angeordnet sind.

Nach einer anderen Ausführungsvariante der Erfindung handelt es sich bei den Photovoltaikelementen um Dünnschichtelemente. Solche Dünnschichtelemente sind aus der Praxis grundsätzlich bekannt. Es kann sich beispielsweise um Dünnschichtelemente auf Basis von amorphem Silicium handeln. Ein solches Dünnschichtelement weist empfohlenermaßen eine Mehrzahl von Solarzellen auf, die auf einer Basisschicht bzw. Basisfolie fixiert sind. Die Solarzellen haben insbesondere eine Dicke von etwa 0,01 mm. Der Erfindung liegt die Erkenntnis zugrunde, dass sich-diese Dünnschichtelemente zum unmittelbaren Aufbringen auf die Oberfläche der oberseitigen Absorberwandung eignen, ohne dass eine transparente Abdeckscheibe vorgesehen sein muss.

Nach einer besonders bevorzugten Ausführungsform der Erfindung ist die Oberfläche der oberseitigen Absorberwandung eben ausgebildet. Dann ist die Oberfläche der unterseitigen Absorberwandung im Bereich der Durchströmungszwischenräume bzw. Durchströmungskanäle zweckmäßigerweise gewölbt bzw. ausgewölbt ausgebildet. Die nach bevorzugter Ausführungsform ebene Oberfläche der oberseitigen Absorberwandung eignet sich insbesondere für das vorstehend beschriebene unmittelbare Aufbringen von Dünnschichtelementen.

Eine ganz besondere und bevorzugte Ausführungsform der Erfindung ist dadurch gekennzeichnet, dass am Rand des Solarabsorbers ein Hohlprofil vorgesehen ist, das über den Umfang des Solarabsorbers umläuft bzw. im Wesentlichen über den Umfang des Solarabsorbers umläuft. Das umlaufende Hohlprofil bildet gleichsam einen Rahmen für den Solarabsorber. Zweckmäßigerweise läuft das Hohlprofil unterbrechungsfrei bzw. im Wesentlichen unterbrechungsfrei über den Umfang des Solarabsorbers um.

Vorzugsweise sind die oberseitige Absorberwandung, die unterseitige Absorberwandung und das Hohlprofil einstückig aus Kunststoff gebildet. Das Hohlprofil ist zweckmäßigerweise einstückig an die oberseitige Absorberwandung und/oder an die unterseitige Absorberwandung angeformt. Das Aggregat aus oberseitiger Absorberwandung, unterseitiger Absorberwandung und Hohlprofil wird empfohlenermaßen im Blasformverfahren oder Tiefziehverfahren hergestellt. Bevorzugt ist dabei das Blasformverfahren.

Es liegt im Rahmen der Erfindung, dass das Hohlprofil bezüglich fluider Medien durchströmungsfrei ausgebildet ist. Durchströmungsfrei meint dabei, dass keine gezielte Durchströmung mit einem fluiden Medium, insbesondere mit einem flüssigen Medium realisiert wird. Das bedeutet, dass insbesondere eine zufällige Luftströmung aufgrund von Temperaturgradienten o. dgl. zugelassen sein kann. Zweckmäßigerweise ist das Hohlprofil lediglich mit Luft bzw. im Wesentlichen lediglich mit Luft ausgefüllt. Empfohlenermaßen ist das Hohlprofil bzw. der hohle Innenraum des Hohlprofils von dem Durchströmungszwischenraum des Solarabsorbers getrennt. Vorzugsweise ist das Hohlprofil über den gesamten Umfang des Solarabsorbers bzw. im Wesentlichen über den gesamten Umfang des Solarabsorbers hohl bzw. im Wesentlichen hohl ausgebildet. Empfohlenermaßen ist das Hohlprofil bezüglich der seine Längsachse L umgebenden Seitenwandungen geschlossen bzw. im Wesentlichen geschlossen ausgebildet. Nach sehr bevorzugter Ausführungsform ist das Hohlprofil vollständig bzw. im Wesentlichen vollständig geschlossen ausgebildet.

Eine ganz besonders bevorzugte Ausführungsform der Erfindung ist dadurch gekennzeichnet, dass das Hohlprofil quer zur unterseitigen Absorberwandung unter Bildung einer nach unten geöffneten Aufnahmewanne über die unterseitige Absorberwandung vorsteht. Gemäß einer Ausführungsvariante kann das Hohlprofil auch quer zur oberseitigen Absorberwandung über die oberseitige Absorberwandung vorstehen. Empfohlenermaßen steht das Hohlprofil um mindestens die maximale Dicke d des Aggregates aus oberseitiger Absorberwandung und unterseitiger Absorberwandung, vorzugsweise um mindestens das 1,5-fache der maximalen Dicke d, bevorzugt um mindestens das 2-fache der maximalen Dicke d und besonders bevorzugt um mindestens das 2,5-fache der maximalen Dicke d über die unterseitige Absorberwandung vor. Die maximale Dicke d des Aggregates aus oberseitiger Absorberwandung und unterseitiger Absorberwandung entspricht insbesondere der Dicke d im Bereich eines Durchströmungszwischenraumes bzw. im Bereich eines Durchströmungskanals. Die Länge der über die unterseitige Absorberwandung vorstehenden Hohlprofilabschnitte wird dabei von der untersten Oberfläche der unterseitigen Absorberwandung ausgemessen.

Zweckmäßigerweise ist der größte Innendurchmesser I des Hohlprofils größer als der größte Abstand A zwischen der oberseitigen und der unterseitigen Absorberwandung im Bereich des zumindest einen Durchströmungszwischenraumes bzw. im Bereich eines Durchströmungszwischenkanals. Empfohlenermaßen ist der größte Innendurchmesser I des Hohlprofils doppelt so groß, bevorzugt dreimal so groß und sehr bevorzugt viermal so groß wie der Abstand A zwischen der oberseitigen und der unterseitigen Absorberwandung im Bereich eines Durchströmungszwischenraumes bzw. im Bereich eines Durchströmungskanals. Zweckmäßigerweise weist das Hohlprofil quer zur Längserstreckung des Hohlprofils einen größeren Innenquerschnitt auf als die im Solarabsorber bevorzugt realisierten Durchströmungskanäle. Der Erfindung liegt die Erkenntnis zugrunde, dass das bevorzugt einstückig angeformte Hohlprofil eine effektive seitliche Barriere bzw. Isolierung gegen Wärmeverluste für den Solarabsorber darstellt. Zusätzlich trägt das Hohlprofil wirksam zur Stabilisierung des gesamten Solarabsorbers bei.

Wie oben bereits dargelegt, wird durch die quer zur unterseitigen Absorber wandung über die unterseitige Absorberwandung vorstehenden Hohlprofilabschnitte eine nach unten offene Aufnahmewanne gebildet. Nach besonders bevorzugter Ausführungsform der Erfindung wird in dieser Aufnahmewanne Wärmedämmmaterial bzw. eine Schicht aus Wärmedämmmaterial aufgenommen. Auf diese Weise wird eine effektive rückseitige Wärmedämmung des Solarabsorbers realisiert, mit der vor allem Konvektionsverluste reduziert werden können. Ein solcher Solarabsorber bzw. Solarkollektor mit in der Aufnahmewanne aufgenommenem Wärmedämmmaterial eignet sich insbesondere zur Brauchwassererwärmung und/oder zur Heizungsunterstützung. Empfohlenermaßen ist das Wärmedämmmaterial formschlüssig in der Aufnahmewanne aufgenommen. Zweckmäßigerweise liegt das Wärmedämmmaterial oberseitig an der unterseitigen Absorberwandung an und seitlich an den über die unterseitige Absorberwandung überstehenden Hohlprofilabschnitten. Vorzugsweise fluchtet die Unterseite des Wärmedämmmaterials mit der Unterseite der vorstehenden Hohlprofilabschnitte. In diesem Fall empfiehlt es sich, dass an der Unterseite des Wärmedämmmaterials bzw. an der Unterseite der Schicht aus dem Wärmedämmmaterial und an der Unterseite der vorstehenden Hohlprofilabschnitte eine Abdeckplatte aufliegt. Zweckmäßigerweise besteht die Abdeckplatte aus Kunststoff. Diese Abdeckplatte ermöglicht in vorteilhafter Weise eine kompakte Ausbildung des erfindungsgemäßen Solarabsorbers.

Der Erfindung liegt die Erkenntnis zugrunde, dass der erfindungsgemäße Solarabsorber einen überraschend hohen Wirkungsgrad aufweist und zwar insbesondere im Hinblick auf die Erzeugung der elektrischen Energie mit den Photovoltaikelementen. Fernerhin liegt der Erfindung die Erkenntnis zugrunde, dass aufgrund der Anordnung der Photovoltaikelemente unmittelbar im Bereich der Oberfläche des Solarabsorbers aus Kunststoff offenbar ein vorteilhafter Abkühleffekt für die Photovoltaikelemente auftritt, der den Wirkungsgrad begünstigt. Trotz dieser beachtlichen Vorteile kann der erfindungsgemäße Solarabsorber nichtsdestoweniger auf einfache, wenig aufwändige und kostengünstige Weise hergestellt werden. Bei dem erfindungsgemäßen Solarabsorber kann weiterhin eine ausgezeichnete Wärmedämmung bzw. Isolierung gegen Wärmeverluste realisiert werden. Das gilt vor allem für die Ausführungsform mit dem Hohlprofil und insbesondere für die Ausführungsform mit der im Hohlprofil aufgenommenen Schicht aus dem Wärmedämmmaterial. Das angeformte Hohlprofil trägt im Übrigen zu einer hohen Stabilität und Festigkeit des Solarabsorbers bei und mittels dieses Hohlprofils kann der Solarabsorber auch auf einfache Weise langfristig funktionssicher an einem Untergrund, beispielsweise an einem Dach fixiert werden. Durch die Kombination von Solarthermie und Photovoltaik in einem Aggregat wird außerdem eine in optischer bzw. ästhetischer Hinsicht einheitliche Lösung für Gebäudedächer u. dgl. geschaffen.

Nachfolgend wird die Erfindung anhand einer lediglich ein Ausführungsbeispiel darstellenden Zeichnung näher erläutert. Es zeigen in schematischer Darstellung;
- Fig. 1: ausschnittsweise einen Querschnitt des Solarabsorbers,
- Fig. 2: den Gegenstand gemäß Fig. 1 in einer anderen Ausführungsform und
- Fig. 3: eine Draufsicht auf einen erfindungsgemäßen Solarabsorber.

In den Figuren ist ein erfindungsgemäßer Solarabsorber mit einer oberseitigen Absorberwandung 1 und einer unterseitigen Absorberwandung 2 dargestellt. Zwischen der oberseitigen Absorberwandung 1 und der unterseitigen Absorberwandung 2 sind als Durchströmungskanäle ausgebildete Durchströmungszwischenräume für ein nicht dargestelltes Wärmeträgermedium vorhanden. Bei dem Wärmeträgermedium mag es sich um Wasser handeln. Die Durchströmungskanäle 3 weisen im Ausführungsbeispiel den gleichen Querschnitt auf und sind parallel zueinander angeordnet. Zwischen den Durchströmungskanälen 3 liegen oberseitige Absorberwandung 1 und unterseitige Absorberwandung 2 unmittelbar aufeinander auf und bilden dort durchströmungsfreie Bereiche 4. Vorzugsweise und im Ausführungsbeispiel besteht sowohl die oberseitige Absorberwandung 1 als auch die unterseitige Absorberwandung 2 aus Kunststoff. Wesentlich für die Erfindung ist, dass zumindest die oberseitige Absorberwandung 1 aus Kunststoff besteht.

Erfindungsgemäß weist der Solarabsorber Photovoltaikelemente 15 zur Gewinnung von elektrischer Energie auf. Vorzugsweise und im Ausführungsbeispiel liegen diese Photovoltaikelemente 15 unmittelbar auf der Oberfläche der oberseitigen Absorberwandung 1 auf. Zweckmäßigerweise und im Ausführungsbeispiel ist auf der oberseitigen Absorberwandung 1 eine transparente Abdeckscheibe 11 angeordnet und die Photovoltaikelemente 15 sind unmittelbar unter dieser transparenten Abdeckscheibe 11 vorgesehen. Bei dieser Abdeckscheibe 11 handelt es sich empfohlenermaßen um eine transparente Glasscheibe. Im Ausführungsbeispiel grenzen die Photovoltaikelemente 15 mit ihrer Oberseite also an die Unterseite der transparenten Abdeckscheibe 11 und mit ihrer Unterseite an die Oberfläche der oberseitigen Absorberwandung 1. Auf diese Weise wird eine effektive Abkühlung der Photovoltaikelemente 15 erreicht und es wird davon ausgegangen, dass hierdurch der Wirkungsgrad bezüglich der Erzeugung der elektrischen Energie beachtlich erhöht werden kann. Bei den Photovoltaikelementen 15 handelt es sich im Ausführungsbeispiel um Solarzellen auf Basis von kristallinem Silizium.

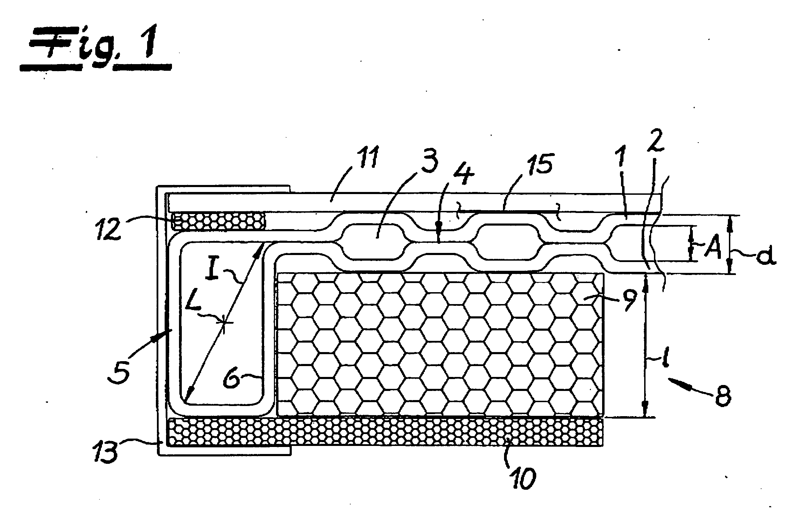

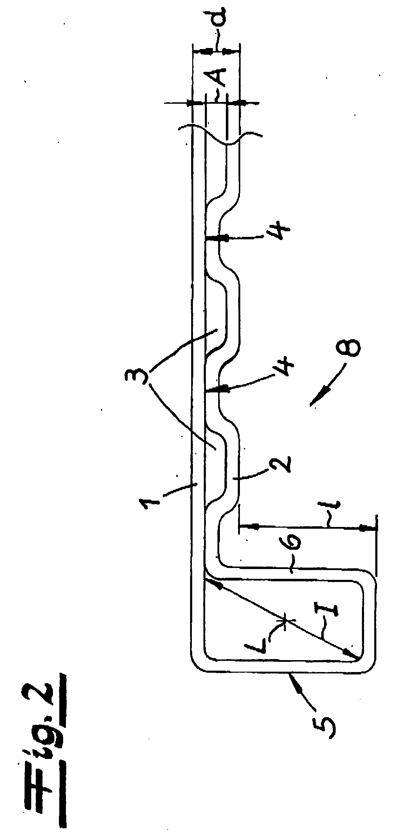

Im Ausführungsbeispiel gemäß Fig. 1 ist im Bereich der Durchströmungskanäle 3 die oberseitige Absorberwandung 1 nach oben gewölbt und die unterseitige Absorberwandung 2 nach unten gewölbt ausgebildet. Dagegen ist im Ausführungsbeispiel gemäß Fig. 2 die oberseitige Absorberwandung 1 eben ausgebildet und im Bereich der Durchströmungskanäle 3 ist lediglich die unterseitige Absorberwandung 2 nach unten gewölbt ausgebildet. Die Ausführungsform nach Fig. 2 ist für die unmittelbare Auflage der Photovoltaikelemente 15 ganz besonders geeignet.

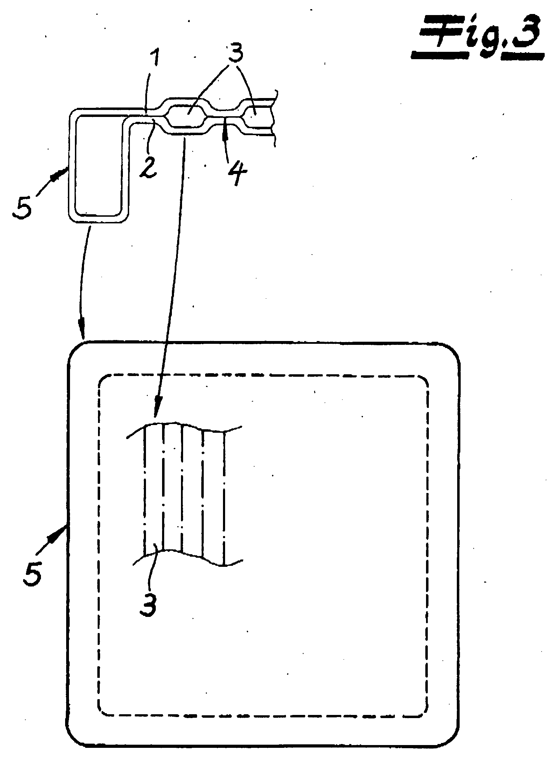

Nach sehr bevorzugter Ausführungsform und im Ausführungsbeispiel ist am Rand des Solarabsorbers ein Hohlprofil 5 vorgesehen, das über den Umfang des Solarabsorbers umläuft. Dieses Hohlprofil 5 bildet gleichsam einen Rahmen für den Solarabsorber. In der Fig. 3 ist erkennbar, dass das Hohlprofil 5 nach bevorzugter Ausführungsform unterbrechungsfrei über den Umfang des Solarabsorbers umläuft. Die Fig. 1 und 2 zeigen, dass das Hohlprofil 5 bezüglich der seine Längsachse L umgebenden Seitenwandungen geschlossen ausgebildet ist. Vorzugsweise bestehen die oberseitige Absorberwandung 1, die unterseitige Absorberwandung 2 sowie das Hohlprofil 5 aus Kunststoff und zweckmäßigerweise wird dieses Aggregat aus oberseitiger Absorberwandung 1, unterseitiger Absorberwandung 2 und Hohlprofil 5 im Blasformverfahren hergestellt. - Bevorzugt und im Ausführungsbeispiel weist das Hohlprofil 5 einen rechteckförmigen bzw. im Wesentlichen rechtförmigen Innenquerschnitt auf. Der Innenquerschnitt des Hohlprofils 5 ist empfohlenermaßen und im Ausführungsbeispiel größer bzw. deutlich größer als der Innenquerschnitt der Durchströmungskanäle 3.

Den Fig. 1 und 2 ist entnehmbar, dass das Hohlprofil 5 quer bzw. senkrecht zur unterseitigen Absorberwandung 2 über die unterseitige Absorberwandung 2 nach unten vorsteht Die nach unten vorstehenden Hohlprofilabschnitte 6 bilden dabei eine nach unten geöffnete Aufnahmewanne 8. In dieser Aufnahmewanne 8 ist nach besonders bevorzugter Ausführungsform der Erfindung und im Ausführungsbeispiel ein Wärmedämmmaterial bzw. eine Schicht 9 aus Wärmedämmmaterial aufgenommen. Die Schicht 9 aus Wärmedämmmaterial ist vorzugsweise und im Ausführungsbeispiel formschlüssig in die Aufnahmewanne 8 eingepasst. Die Schicht 9 bildet eine effektive rückseitige Wärmedämmung für den Solarabsorber. Empfohlenermaßen und im Ausführungsbeispiel fluchtet die Unterseite der Schicht 9 mit der Unterseite des Hohlprofils 5. Auf die Unterseite der Schicht 9 und die Unterseite des Hohlprofils 5 ist im Ausführungsbeispiel eine wärmedämmende Abdeckplatte 10 aufgebracht. Sie bildet einen kompakten Abschluss des Solarabsorbers und bietet eine zusätzliche Wärmedämmungsfunktion. - Die transparente Abdeckscheibe 11 liegt im Ausführungsbeispiel unter Zwischenschaltung eines Abstandselementes 12 auf der Oberseite des Hohlprofils 5 auf. Das Abstandselement 12 besteht zweckmäßigerweise ebenfalls aus einem wärmedämmenden Material. Die Fig. 1 und 2 zeigen weiterhin, dass der Solarabsorber vorzugsweise mittels eines Klammerelementes 13 bzw. mittels Klammerelementen 13 stabilisiert wird. Im Ausführungsbeispiel nach den Fig. 1 und 2 übergreift ein Klammerelement 13 die transparente Abdeckscheibe 11 und es untergreift die unterseitige Abdeckplatte 10.

Gemäß besonders bevorzugter Ausführungsform ist das Aggregat aus oberseitiger Absorberwandung 1, unterseitiger Absorberwandung 2 und Hohlprofil 5 einstückig aus Kunststoff gebildet. Das Hohlprofil 5 ist im Ausführungsbeispiel einstückig an die oberseitige Absorberwandung 1 und an die unterseitige Absorberwandung 2 angeformt. Wie oben bereits dargelegt wird das Aggregat aus oberseitiger Absorberwandung 1, unterseitiger Absorberwandung 2 und Hohlprofil 5, nach sehr bevorzugter Ausführungsform im Blasformverfahren hergestellt.

Es liegt im Rahmen der Erfindung, dass der größte Innendurchmesser I des Hohlprofils 5 größer bzw. deutlich größer ist als der größte Abstand A zwischen der oberseitigen Absorberwandung 1 und der unterseitigen Absorberwandung 2 im Bereich eines Durchströmungskanals 3. Vorzugsweise und im Ausführungsbeispiel ist der größte Innendurchmesser I des Hohlprofils 5 mehr als dreimal so groß wie der größte Abstand A. Wie oben bereits dargelegt, weist das Hohlprofil 5 empfohlenermaßen eine größere bzw. eine deutlich größere Innenquerschnittsfläche auf als ein Durchströmungskanal 3. Zweckmäßigerweise und im Ausführungsbeispiel ist die Innenquerschnittsfläche des Hohlprofils 5 mehr als doppelt so groß, bevorzugt mehr als dreimal so groß wie die Innenquerschnittsfläche eines Durchströmungskanals 3.

Es liegt im Rahmen der Erfindung, dass das Hohlprofil 5 bezüglich fluider Medien durchströmungsfrei ausgebildet ist. Es empfiehlt sich, dass das Hohlprofil 5 von den Durchströmungskanälen 3 getrennt ausgebildet ist. Zweckmäßigerweise ist das Hohlprofil 5 mit Luft ausgefüllt. Dass das Hohlprofil 5 durchströmungsfrei ausgebildet ist, meint im Rahmen der Erfindung, dass keine gezielte Durchströmung des Hohlprofils 5 realisiert wird. Eine zufällige Luftströmung, beispielsweise aufgrund von Temperaturgradienten kann aber zugelassen sein.

Vorzugsweise und im Ausführungsbeispiel steht das Hohlprofil 5 mit seinen nach unten vorstehenden Hohlprofilabschnitten 6 um mehr als das 1,5-fache der maximalen Dicke d des Aggregates aus oberseitiger Absorberwandung 1 und unterseitiger Absorberwandung 2 über die unterseitige Absorberwandung 2 vor. Gemessen wird dabei von der untersten Oberfläche der unterseitigen Absorberwandung 2 aus. Die entsprechende Länge I der nach unten vorstehenden Hohlprofilabschnitte 6 ist dann also mehr als 1,5 mal so lang, vorzugsweise und im Ausführungsbeispiel mehr als zweimal so lang wie die maximale Dicke d.

Empfohlenermaßen und im Ausführungsbeispiel liegen die Photovoltaikelemente 15 unmittelbar auf dem Solarabsorber aus Kunststoff auf. Durch diese Anordnung ergibt sich ein sehr vorteilhafter Abkühleffekt für die Photovoltaikelemente 15. Der erfindungsgemäße Solarabsorber zeichnet sich durch einen ausgezeichneten Wirkungsgrad bei der Erzeugung der thermischen Energie und insbesondere bei der Erzeugung der elektrischen Energie aus.

## Patentansprüche

1. Solarabsorber zur Gewinnung von thermischer Energie mit einer oberseitigen Absorberwandung (1) und einer unterseitigen Absorberwandung (2), wobei zwischen der oberseitigen Absorberwandung (1) und der unterseitigen Absorberwandung (2) zumindest ein Durchströmungszwischenraum für ein Wärmeträgermedium vorhanden ist,
wobei der Durchströmungszwischenraum von einer Mehrzahl von Durchströmungskanälen gebildet wird,
wobei zusätzlich Photovoltaikelemente (15) zur Gewinnung von elektrischer Energie vorgesehen sind,
und wobei die Photovoltaikelemente (15) unmittelbar auf der Oberfläche der oberseitigen Absorberwandung (1) aufliegen oder mit einem Abstand kleiner 5 mm, vorzugsweise kleiner 3 mm, über der Oberfläche der oberseitigen Absorberwandung (1) angeordnet sind, **dadurch gekennzeichnet, dass** die oberseitige Absorberwandung (1) und die unterseitige Absorberwandung (2) aus Kunststoff bestehen und wobei das Aggregat aus oberseitiger und unterseitiger Absorberwandung in einem diskontinuierlichen Extrusionsverfahren, im Pressverfahren oder im Tiefziehverfahren hergestellt ist.

2. Solarabsorber nach Anspruch 1, wobei zumindest die oberseitige Absorberwandung (1) aus Kunststoff besteht bzw. im Wesentlichen aus Kunststoff besteht.

3. Solarabsorber nach einem der Ansprüche 1 oder 2, wobei der Kunststoff Additive zur Erhöhung der Absorptionsfähigkeit und/oder zur UV-Stabilisierung und/oder zur Erhöhung der mechanischen Festigkeit enthält.

4. Solarabsorber nach einem der Ansprüche 1 bis 3, wobei die oberseitige Absorberwandung (1) und bevorzugt auch die unterseitige Absorberwandung (2) eine Wandstärke von 0,5 bis 4 mm, vorzugsweise von 1 bis 3 mm und bevorzugt von 2 bis 3 mm aufweist.

5. Solarabsorber nach einem der Ansprüche 1 bis 4, wobei über bzw. auf der oberseitigen Absorberwandung (1) zumindest eine transparente Abdeckscheibe (11) angeordnet ist und wobei die Photovoltaikelemente (15) unter oder in der transparenten Abdeckscheibe (11) vorgesehen sind.

6. Solarabsorber nach einem der Ansprüche 1 bis 5, wobei die Photovoltaikelemente (15) Solarzellen auf Basis von kristallinem Silizium sind.

7. Solarabsorber nach einem der Ansprüche 1 bis 4, wobei die Photovoltaikelemente (15) Dünnschichtelemente sind.

8. Solarabsorber nach einem der Ansprüche 1 bis 7, wobei die Oberfläche der oberseitigen Absorberwandung (1) eben ausgebildet ist.

9. Solarabsorber nach einem der Ansprüche 1 bis 8, wobei am Rand des Solarabsorbers ein Hohlprofil (5) vorgesehen ist, das über den Umfang des Solarabsorbers umläuft bzw. im Wesentlichen über den Umfang des Solarabsorbers umläuft.

10. Solarabsorber nach Anspruch 9, wobei die oberseitige Absorberwandung (1), die unterseitige Absorberwandung (2) und das Hohlprofil (5) einstückig aus Kunststoff gebildet sind.

11. Solarabsorber nach einem der Ansprüche 9 oder 10, wobei das Hohlprofil (5) bezüglich fluider Medien durchströmungsfrei ausgebildet ist.

12. Solarabsorber nach einem der Ansprüche 9 bis 11, wobei das Hohlprofil (5) quer zur unterseitigen Absorberwandung (2) unter Bildung einer Aufnahmewanne (8) über die unterseitige Absorberwandung (2) vorsteht.

13. Solarabsorber nach Anspruch 12, wobei in der Aufnahmewanne (8) Wärmedämmmaterial bzw. eine Schicht (9) aus Wärmedämmmaterial aufgenommen ist.

## Claims

1. A solar absorber for obtaining thermal energy with a top absorber wall (1) and bottom absorber wall (2), wherein at least one flow-through gap for a heat transfer medium is present between the top absorber wall (1) and bottom absorber wall (2),
wherein the flow-through gap is comprised of a plurality of flow-through channels,
wherein photovoltaic elements (15) are additionally provided for obtaining electrical energy,
and wherein the photovoltaic elements (15) rest directly on the surface of the top absorber wall (1) or are situated spaced less than 5 mm, preferably less than 3 mm, apart from the surface of the top absorber wall (1), **characterized in that** the top absorber wall (1) and bottom absorber wall (2) consist of plastic, and wherein the aggregate comprised of the top and bottom absorber wall is fabricated in a discontinuous extrusion process, a pressing process, or a deepdrawing process.

2. The solar absorber according to claim 1, wherein at least the top absorber wall (1) consists of plastic or essentially consists of plastic.

3. The solar absorber according to one of claims 1 or 2, wherein the plastic contains additives for increasing the absorbency and/or for UV stabilization and/or for increasing the mechanical strength.

4. The solar absorber according to one of claims 1 to 3, wherein the top absorber wall (1) and preferably the bottom absorber wall (2) as well exhibit a wall thickness of 0.5 to 4 mm, particularly of 1 to 3 mm, and preferably of 2 to 3 mm.

5. The solar absorber according to one of claims 1 to 4, wherein at least one transparent cover plate (11) is arranged above or on the top absorber wall (1), and wherein the photovoltaic elements (15) are provided under or in the transparent cover plate (11).

6. The solar absorber according to one of claims 1 to 5, wherein the photovoltaic elements (15) are solar cells based on crystalline silicon.

7. The solar absorber according to one of claims 1 to 6, wherein the photovoltaic elements (15) are thin layer elements.

8. The solar absorber according to one of claims 1 to 7, wherein the surface of the top absorber wall (1) is flat.

9. The solar absorber according to one of claims 1 to 8, wherein the edge of the solar absorber is provided with a hollow profile (5), which runs over the periphery of the solar absorber or essentially runs over the periphery of the solar absorber.

10. The solar absorber according to claim 9, wherein the top absorber wall (1), the bottom absorber wall (2) and the hollow profile (5) are made out of a single plastic piece.

11. The solar absorber according to one of claims 9 or 10, wherein the hollow profile (5) is designed to allow fluidic media to freely flow through.

12. The solar absorber according to one of claims 9 to 11, wherein the hollow profile (5) protrudes transverse to the bottom absorber wall (2) with the formation of a receptacle (8) over the bottom absorber wall (2).

13. The solar absorber according to claim 12, wherein the receptacle (8) incorporates a thermal insulation material or a layer (9) comprised of thermal insulation material.

## Revendications

1. Absorbeur solaire destiné à récupérer de l'énergie thermique, avec une paroi supérieure d'absorbeur (1) et une paroi inférieure d'absorbeur (2), au moins un espace intermédiaire d'écoulement étant prévu pour un agent caloporteur entre la paroi supérieure d'absorbeur (1) et la paroi inférieure d'absorbeur (2),
dans lequel l'espace intermédiaire d'écoulement est formé par une pluralité de canaux d'écoulement,
dans lequel des éléments photovoltaïques (15) sont également prévus pour la récupération d'énergie électrique,
et dans lequel les éléments photovoltaïques (15) reposent directement sur la surface supérieure de la paroi supérieure d'absorbeur (1) et répartis sur la surfaces supérieures de la paroi supérieure d'absorbeur (1) en respectant un espace inférieur à 5 mm, de préférence inférieur à 3 mm, **caractérisé en ce que** la paroi supérieure d'absorbeur (1) et la paroi inférieure d'absorbeur (2) sont constituées de plastique, et l'agrégat des parois d'absorbeur supérieure et inférieure est réalisé au cours d'un procédé d'extrusion discontinu, d'un procédé de pressage ou d'un procédé d'emboutissage profond.

2. Absorbeur solaire selon la revendication 1, dans lequel au moins la paroi supérieure d'absorbeur (1) est constituée de plastique ou essentiellement constituée de plastique.

3. Absorbeur solaire selon l'une des revendications 1 ou 2, dans lequel le plastique contient des additifs destinés à augmenter la capacité d'absorption et/ou à stabiliser les UV et/ou à augmenter la résistance mécanique.

4. Absorbeur solaire selon l'une des revendications 1 à 3, dans lequel la paroi supérieure d'absorbeur (1) et de préférence également la paroi inférieure d'absorbeur (2) présente/présentent une épaisseur de paroi de 0,5 à 4 mm, de préférence de 1 à 3 mm et mieux, de 2 à 3 mm.

5. Absorbeur solaire selon l'une des revendications 1 à 4, dans lequel au moins une vitre de recouvrement transparente (11) est agencée au-dessus de la paroi supérieure d'absorbeur (1) ou sur celle-ci, et dans lequel les éléments photovoltaïques (15) sont prévus sous ou dans la vitre de recouvrement transparente (11).

6. Absorbeur solaire selon l'une des revendications 1 à 5, dans lequel les éléments photovoltaïques (15) sont des cellules solaires à base de silice cristalline.

7. Absorbeur solaire selon l'une des revendications 1 à 4, dans lequel les éléments photovoltaïques (15) sont des éléments en couche mince.

8. Absorbeur solaire selon l'une des revendications 1 à 7, dans lequel la surface supérieure de la paroi supérieure d'absorbeur (1) est conçue plane.

9. Absorbeur solaire selon l'une des revendications 1 à 8, dans lequel il est prévu un profilé creux (5) sur le bord de l'absorbeur solaire, lequel s'étend sur le pourtour de l'absorbeur solaire, ou quasiment sur le pourtour de l'absorbeur solaire.

10. Absorbeur solaire selon la revendication 9, dans lequel la paroi supérieure d'absorbeur (1), la paroi inférieure d'absorbeur (2) et le profilé creux (5) sont conçus à partir d'une seule pièce en plastique.

11. Absorbeur solaire selon l'une des revendications 9 ou 10, dans lequel le profilé creux (5) est conçu libre pour l'écoulement de milieux fluides.

12. Absorbeur solaire selon l'une des revendications 9 à 11, dans lequel le profilé creux (5) faisant saillie au-dessus de la paroi inférieure d'absorbeur (2), perpendiculairement à la paroi inférieure d'absorbeur (2), en formant une cuvette de réception (8).

13. Absorbeur solaire selon la revendication 12, dans lequel un matériau d'isolation thermique ou une couche (9) de matériau d'isolation thermique est reçue dans la cuvette de réception (8).
